(19) Europäisches Patentamt
European Patent Office
Office européen des brevets

(11) **EP 1 455 166 B1**

(12) **EUROPÄISCHE PATENTSCHRIFT**

(45) Veröffentlichungstag und Bekanntmachung des Hinweises auf die Patenterteilung:
**11.03.2009   Patentblatt 2009/11**

(51) Int Cl.:
***G01F 1/66*** *(2006.01)*

(21) Anmeldenummer: 03011417.7

(22) Anmeldetag: **20.05.2003**

(54) **Ultraschalldurchflussmessverfahren**

Ultrasonic flow measuring method

Procédé de mesure de débit par ultrasons

(84) Benannte Vertragsstaaten:
**AT BE BG CH CY CZ DE DK EE ES FI FR GB GR HU IE IT LI LU MC NL PT RO SE SI SK TR**

(30) Priorität: **06.03.2003   DE 10310041**
**18.03.2003   DE 10312034**

(43) Veröffentlichungstag der Anmeldung:
**08.09.2004   Patentblatt 2004/37**

(73) Patentinhaber: **Krohne AG**
**4019 Basel (CH)**

(72) Erfinder:
• **Molenaar, Marcel Meijlorn**
**3311 ZG, Dordrecht (NL)**
• **Van Dijk, Eugène Albert**
**3027 DE, Spijkenisse (NL)**

(74) Vertreter: **Gesthuysen, von Rohr & Eggert**
**Patentanwälte**
**Postfach 10 13 54**
**45013 Essen (DE)**

(56) Entgegenhaltungen:
**DE-A- 3 809 189          US-A- 5 280 728**

• **PATENT ABSTRACTS OF JAPAN Bd. 1996, Nr. 09, 30. September 1996 (1996-09-30) & JP 8 128875 A (MATSUSHITA ELECTRIC IND CO LTD), 21. Mai 1996 (1996-05-21)**
• **PATENT ABSTRACTS OF JAPAN Bd. 1998, Nr. 08, 30. Juni 1998 (1998-06-30) & JP 10 062219 A (AICHI TOKEI DENKI CO LTD), 6. März 1998 (1998-03-06)**

**Beschreibung**

Die Erfindung betrifft ein Ultraschalldurchflußmeßverfahren, wobei der Durchfluß eines strömenden Mediums durch eine Leitung mittels einer Laufzeitmessung eines Ultraschallsignals ermittelt wird, das von einem ersten Ultraschallwandler zu wenigstens einem anderen Ultraschallwandler läuft.

Zur Durchführung von Ultraschalldurchflußmeßverfahren stehen Ultraschalldurchflußmeßgeräte zur Verfügung, die von verschiedenen Einbauvarianten bis hin zu flexiblen Anklemmsystemen (Clamp-on-Ultraschalldurchflußmeßgeräte) reichen. Ultraschalldurchflußmeßverfahren stehen für Leitungen mit einem Durchmesser von wenigen Millimetern bis hin zu einigen Metern zur Verfügung, wobei typischerweise Volumenströme niederviskoser Medien gemessen werden.

Das Meßprinzip bei einem Ultraschalldurchflußmeßverfahren beruht entweder auf dem Mitführungseffekt oder dem Doppler-Effekt. Der Mitführungseffekt beruht darauf, daß ein durch ein strömendes Medium laufendes Ultraschallsignal in Abhängigkeit von der Strömungsgeschwindigkeit des durchlaufenen Mediums eine längere bzw. kürzere Laufzeit zwischen zwei Ultraschallwandlern aufweist, wenn der durchlaufene Meßpfad eine Richtungskomponente entgegen oder in Richtung der Strömung des Mediums aufweist. Gemessen wird dabei die mittlere Strömungsgeschwindigkeit über den von dem Ultraschallsignal durchlaufene Pfad in der Leitung. Beim Doppler-Effekt werden im Medium vorhandene schallstreuende Teilchen ausgenutzt, wobei die Strömungsgeschwindigkeit des Mediums im Schnittvolumen zweier Ultraschallpfade gemessen wird.

Die Vorzüge von Ultraschalldurchflußmeßgeräten liegen im wesentlichen darin, daß in der Leitung keine bewegten Teile erforderlich sind, es in der Leitung zu keinen Querschnittsverengungen kommt, das angewandte Verfahren im wesentlichen unabhängig von der elektrischen Leitfähigkeit und der Viskosität des strömenden Mediums ist, ein großer Meßbereich zur Verfügung steht, es zu praktisch keinen Druckverlusten kommt und bei der Verwendung der Clamp-on-Technik kein Auftrennen von Leitungen erforderlich ist. Allerdings sind für genaue und reproduzierbare Ultraschalldurchflußmessungen ungestörte geradlinige Zulauf- bzw. Ablaufbereiche erforderlich, um ein stabiles Strömungsprofil zu erzielen. Weiterhin sind die mit Ultraschalldurchflußmeßverfahren ermittelten Strömungsgeschwindigkeiten typischerweise keine über den Querschnitt der Leitung gemittelten Geschwindigkeiten, so daß zur Berechnung des Volumen- oder Massestroms eine entsprechende Korrektur erforderlich ist.

Ultraschalldurchflußmeßverfahren auf der Grundlage des weiter oben angesprochenen Mitführungseffekts verwenden eine Laufzeitmessung eines zwischen zwei in Strömungsrichtung zueinander versetzt angeordneten Ultraschallwandlern laufenden Ultraschallsignals. Die von dem zur Durchführung des Ultraschalldurchflußmeßverfahrens verwendeten Ultraschalldurchflußmeßgerät ermittelte Laufzeit setzt sich dabei zusammen aus der Laufzeit des Ultraschallsignals durch das strömende Medium, der Laufzeit des Ultraschallsignals in den Ultraschallwandlern und Verzögerungen in der Meßelektronik des Ultraschalldurchflußmeßgeräts. Die Anteile der insgesamt ermittelten Laufzeit, die von der Laufzeit des Ultraschallsignals durch das strömende Medium verschieden sind, also die insgesamt ermittelte Laufzeit abzüglich der Laufzeit im strömenden Medium, bilden insgesamt die sogenannte Totzeit des Ultraschalldurchflußmeßverfahrens bzw. des Ultraschalldurchflußmeßgeräts. Zur Erzielung genauer Meßergebnisse ist es erforderlich, bezüglich dieser Totzeit eine Korrektur durchzuführen.

Bei herkömmlichen Ultraschalldurchflußmeßverfahren und Ultraschalldurchflußmeßgeräten ist bisher üblicherweise für die verwendeten Ultraschallwandler oder auch nur für einen bestimmten Typ eines Ultraschallwandlers einmalig die Bestimmung der Totzeit vorgenommen worden, um dann im eigentlichen Meßbetrieb unter der Annahme, daß die einmal ermittelte Totzeit konstant bleibt und sich nicht mehr ändert, immer nur diese Totzeit für die zuvor angesprochene Korrektur zu verwenden. In der Praxis hat sich jedoch gezeigt, daß die damit erzielten Meßergebnisse teilweise stark fehlerbehaftet sind, da die Totzeit während des Meßbetriebs gerade nicht konstant bleibt sondern Änderungen unterworfen ist. Die Totzeit wird nämlich beeinflußt durch Änderungen des Ultraschallfeldes, den temperaturabhängigen Eigenschaften der Ultraschallwandler und den im wesentlichen ebenfalls temperaturabhängige Schwankungen in der Meßelektronik. Dabei ist das Ultraschallfeld seinerseits abhängig von der Geometrie der Ultraschallwandler, dem Abstand vom Ultraschallwandler und den akustischen Eigenschaften des strömenden Mediums.

Um die im wesentlichen auf Temperatureffekten beruhende Totzeitproblematik zu vermeiden bzw. zumindest teilweise zu kompensieren, sind verschiedene Vorgehensweisen vorgeschlagen worden: Beispielsweise ist vorgeschlagen worden, für eine Totzeitkorrektur gewisse Parameter der Meßelektronik zu ermitteln oder direkt die Laufzeit innerhalb der Ultraschallwandler zu bestimmen, wozu exemplarisch auf die US 5,280,728 sowie die US 5,824,914 verwiesen wird. Mit diesen Vorgehensweisen ist es jedoch nicht möglich, die Totzeit beeinflussende und von dem strömenden Medium selbst herrührende Effekte zu berücksichtigen, so daß im Ergebnis die Korrektur der Totzeit weiterhin unzureichend ist.

Dementsprechend ist es die Aufgabe der Erfindung, ein solches Ultraschalldurchflußmeßverfahren anzugeben, bei dem zur Ermittlung eines möglichst exakten Durchflußwerts eine möglichst genaue Ermittlung der Totzeit gewährleistet ist.

Das erfindungsgemäße Ultraschalldurchflußmeßverfahren, mit dem die zuvor hergeleitete und aufgezeigte Aufgabe gelöst ist, ist ausgehend von dem eingangs beschriebenen Ultraschalldurchflußmeßverfahren **dadurch gekennzeichnet, daß** die Laufzeit des Ultraschallsignals bei *m*-maligem, unmittelbar aufeinanderfolgenden Durchlaufen einer vorbestimmten Strecke im strömenden Medium mit vorbestimmter Länge und vorbestimmtem Winkel gegenüber der Strömungsrichtung erfaßt wird und die Laufzeit des Ultraschallsignals bei *n*-maligem, unmittelbar aufeinanderfolgenden Durchlaufen der vorbestimmten Strecke im strömenden Medium mit der vorbestimmten Länge und dem vorbestimmten Winkel gegenüber der Strömungsrichtung erfaßt wird, wobei sich die ermittelten Laufzeiten des Ultraschallsignals sowohl aus der Totzeit des Ultraschalldurchflußmeßverfahrens als auch aus der Zeit zusammensetzen, die für das m- bzw. n-malige Durchlaufen der vorbestimmten Strecke im strömenden Medium erforderlich ist, wobei *m* und *n* ganzzahlig und voneinander verschieden sind und aus den erfaßten Laufzeiten die Totzeit des Ultraschalldurchflußmeßverfahrens ermittelt wird.

Wenn zuvor davon die Rede ist, daß die Laufzeit des Ultraschallsignals bei mehrmaligem, unmittelbar aufeinanderfolgenden Durchlaufen einer vorbestimmten Strecke mit vorbestimmter Länge und vorbestimmtem Winkel gegenüber der Strömungsrichtung erfaßt wird, so ist damit gemeint, daß immer eine gleiche, nämlich bezüglich ihrer Länge und dem Winkel gegenüber der Strömungsrichtung gleiche Strecke von dem Ultraschallsignal durchlaufen wird. Diese gleiche Strecke kann immer dieselbe Strecke sein, z. B. durch mehrfache Reflektion des Ultraschallsignals zwischen zwei Ultraschallwandlern. Diese gleiche Strecke kann aber auch dadurch durchlaufen werden, daß in Strömungsrichtung aufeinanderfolgende Strecken zwischen insgesamt wenigstens drei Ultraschallwandlern durchlaufen werden. Ist das Strömungsprofil um die Hauptströmungsachse herum rotationssymmetrisch, so können als gleiche Strekken all solche Strecken angesehen werden, die die gleiche Länge aufweisen und unabhängig von ihrer sonstigen Orientierung im Raum mit der Hauptströmungsachse den gleichen Winkel einschließen. Als der mit der Hauptströmungsachse eingeschlossene Winkel ist dabei der von der Strecke und der Hauptströmungsachse eingeschlossenen spitze Winkel anzusehen; die Richtung, in der die jeweilige Strecke durchlaufen wird, bleibt also bei der Bestimmung des Winkels außer Betracht.

Aufgrund des *m*-maligen bzw. *n*-maligen Durchlaufens der gleichen Strecke stehen erfindungsgemäß wenigstens zwei voneinander verschiedene Laufzeiten zur Verfügung, die sich einerseits aus der Totzeit des Ultraschalldurchflußmeßverfahrens und andererseits aus der Zeit zusammensetzen, die für das *m*-malige bzw. *n*-malige Durchlaufen der vorbestimmten Strecke im strömenden Medium erforderlich ist. Damit ergibt sich ein Gleichungssystem von zwei Gleichungen, nämlich jeweils einer Gleichung für das m- bzw. n-malige Durchlaufen der gleichen Strecke, mit zwei Unbekannten, nämlich der Totzeit einerseits und der Zeit für das Durchlaufen des strömenden Mediums ohne Zeiten in den Ultraschallwandlern und Verzögerungen durch die Meßelektronik andererseits. Ein solches Gleichungssystem läßt sich mit mathematischen Standardverfahren lösen.

Dabei gilt, daß die Erfindung natürlich auch solche Ultraschalldurchflußmeßverfahren umfaßt, bei denen neben dem *m*-maligen und dem *n*-maligen Durchlaufen der vorbestimmten Strecke diese Strecke wenigstens ein weiteres Mal *z*-malig durchlaufen wird, wobei *z* ebenfalls ganzzahlig und von *m* und *n* verschieden ist. Das sich damit ergebende Gleichungssystem läßt sich ebenfalls mit mathematischen Standardverfahren lösen, wobei gegebenenfalls keine geschlossene Lösung mehr angebbar ist, sondern eine Lösung nur im Rahmen eines Näherungsverfahrens angegeben werden kann.

Wird die vorbestimmte Strecke einmal *m*-malig und einmal *n*-malig durchlaufen, so ist gemäß einer bevorzugten Weiterbildung der Erfindung zur Ermittlung der Totzeit $t_d$ folgende Formel vorgesehen:

$$t_d = \frac{t_m \cdot n - t_n \cdot m}{n - m},$$

wobei $t_m$ die Laufzeit des Ultraschallsignals bei *m*-maligem, unmittelbar aufeinanderfolgenden Durchlaufen der vorbestimmten Strecke mit der vorbestimmten Länge und dem vorbestimmten Winkel gegenüber der Strömungsrichtung und $t_n$ die Laufzeit des Ultraschallsignals bei *n*-maligen, unmittelbar aufeinanderfolgenden Durchlaufen der vorbestimmten Strecke mit der vorbestimmten Länge und dem vorbestimmten Winkel gegenüber der Strömungsrichtung ist. Diese Formel ist bei Durchlaufen der vorbestimmten Strecken in immer gleiche Richtung relativ zur Strömung, also immer mit einer Komponente längs oder entgegen der Strömungsrichtung oder senkrecht zur Strömungsrichtung, immer anwendbar. Bei Anwendung dieser Formel auf den Fall, daß das Ultraschallsignal mehrfach zwischen zwei in Strömungsrichtung zueinander versetzt angeordneten Ultraschallwandlern reflektiert wird, ist es erforderlich, daß *m* und *n* gerade sind, die vorbestimmte Strecke also immer ein ganzzahliges Mal sowohl mit einer Komponente in Strömungsrichtung als auch mit einer Komponente entgegen der Strömungsrichtung durchlaufen wird. Damit das Ultraschallsignal mehrfach zwischen zwei in Strömungsrichtung zueinander versetzt angeordneten Ultraschallwandlern reflektiert wird, stehen die Ultraschallwandler derart einander gegenüber, daß ihre Sende- bzw. Empfangsflächen parallel zueinander verlaufen.

Wie weiter oben schon angesprochen, ist gemäß einer bevorzugten Weiterbildung der Erfindung vorgesehen, daß die jeweiligen Laufzeiten des Ultraschallsignals bei *m*-maligem, *n*-maligem, ... *z*-maligem, unmittelbar unmittelbar aufeinanderfolgenden Durchlaufen der vorbestimmten Strecke mit der vorbestimmten Länge und dem vorbestimmten Winkel gegenüber der Strömungsrichtung erfaßt werden, wobei $m, n, ... z$ ganzzahlig und voneinander verschieden sind. Dabei ist gemäß einer bevorzugten Weiterbildung der Erfindung zur Ermittlung der Totzeit $t_d$ des Ultraschalldurchflußmeßverfahrens folgende Formel vorgesehen:

$$\begin{bmatrix} 1 & m \\ 1 & n \\ \cdot & \cdot \\ \cdot & \cdot \\ \cdot & \cdot \\ 1 & z \end{bmatrix} \cdot \begin{bmatrix} t_d \\ t_s \end{bmatrix} = \begin{bmatrix} t_m \\ t_n \\ \cdot \\ \cdot \\ \cdot \\ t_z \end{bmatrix},$$

wobei $t_s$ die Laufzeit ist, die nur von dem Durchlaufen der Strecken im strömenden Medium herrührt, also der insgesamt erfaßten Laufzeit abzüglich der Totzeit entspricht, und eine Lösung auf der Grundlage eines Näherungsverfahrens, wie der Methode der geringsten Abstandsquadrate, angegeben wird.

Was die Anordnung der Ultraschallwandler angeht, so ist eine Vielzahl von Konfigurationen möglich. Gemäß einer bevorzugten Weiterbildung kann vorgesehen sein, daß das Ultraschallsignal mehrfach zwischen genau zwei Ultraschallwandlern reflektiert wird. Diese können in Strömungsrichtung zueinander versetzt angeordneten sein. Es ist jedoch auch möglich, daß die Ultraschallwandler in Strömungsrichtung nicht zueinander versetzt sind, so daß das Ultraschallsignal senkrecht zur Strömungsrichtung läuft.

Gemäß einer alternativen bevorzugten Weiterbildung der Erfindung ist vorgesehen, daß wenigstens drei jeweils in Strömungsrichtung zueinander versetzte Ultraschallwandler derart angeordnet werden, daß das Ultraschallsignal von einem ersten Ultraschallwandler längs der vorbestimmten Strecke mit vorbestimmter Länge und vorbestimmtem Winkel gegenüber der Strömungsrichtung ausgesandt und von einem zweiten Ultraschallwandler empfangen wird, das Ultraschallsignal an der Leitung im Bereich des zweiten Ultraschallwandlers teilweise reflektiert wird und längs der vorbestimmten Strecke mit vorbestimmter Länge und vorbestimmtem Winkel gegenüber der Strömungsrichtung zu dem dritten Ultraschallwandler läuft, die Laufzeit des Ultraschallsignals von dem ersten Ultraschallwandler zu dem zweiten Ultraschallwandler und die Laufzeit des Ultraschallsignals von dem ersten Ultraschallwandler zu dem dritten Ultraschallwandler erfaßt wird und die Totzeit des Ultraschalldurchflußmeßverfahrens aus der Differenz der doppelten Laufzeit des Ultraschallsignals von dem ersten Ultraschallwandler zu dem zweiten Ultraschallwandler und der einfachen Laufzeit des Ultraschallsignals von dem ersten Ultraschallwandler zu dem dritten Ultraschallwandler berechnet wird. Gemäß dieser bevorzugten Weiterbildung der Erfindung wird eine sehr effiziente Konfiguration der Ultraschallwandler vorgeschlagen, die sich insbesondere auch im Rahmen eines Anklemm-Ultraschalldurchflußmeßgeräts (Clamp-on-Ultraschalldurchflußmeßgerät) auf einfache Weise realisieren läßt.

Was die Korrektur des mit dem erfindungsgemäßen Ultraschalldurchflußmeßverfahren ermittelten Durchflußwerts angeht, so erfolgt im allgemeinen eine Berücksichtigung der Totzeit derart, daß diese von der insgesamt erfaßten Laufzeit des Ultraschallsignals von dem einen zu dem anderen Ultraschallwandler subtrahiert wird, so daß für den Durchflußwert lediglich die Zeit berücksichtigt wird, die das Ultraschallsignal effektiv zum Durchlaufen des Meßpfads im strömenden Medium benötigt hat. Dabei kann die Totzeit des Ultraschalldurchflußmeßverfahrens am Anfang des Verfahrens und/oder zu verschiedenen Zeitpunkten während des Verfahrens bestimmt werden. Eine entsprechend bestimmte Totzeit kann dann z. B. für eine vorbestimmte Zeitdauer als Totzeit für die Korrektur verwendet werden.

Gemäß einer bevorzugten Weiterbildung der Erfindung ist jedoch vorgesehen, daß die Totzeit des Ultraschalldurchflußmeßverfahrens in Echtzeit ermittelt wird und bei der Ermittlung des Durchflusses des strömenden Mediums vorzugsweise ebenfalls in Echtzeit berücksichtigt wird. Eine entsprechende Berücksichtigung in Echtzeit wird durch die einfache Anwendbarkeit des erfindungsgemäßen Verfahrens ermöglicht, wobei die Berücksichtigung der Totzeit in Echtzeit eine optimale Korrektur des ermittelten Durchflußwerts und damit höchst genaue Meßergebnisse liefert.

Im einzelnen gibt es nun eine Vielzahl von Möglichkeiten, das erfindungsgemäße Ultraschalldurchflußmeßverfahren auszugestalten und weiterzubilden.

Dazu wird auf die dem Patentanspruch 1 nachgeordneten Patentansprüche sowie auf die nachfolgende detaillierte Beschreibung eines bevorzugten Ausführungsbeispiels unter Bezugnahme auf die Zeichnung verwiesen. In der Zeichnung zeigt

Fig. 1 schematisch die Zusammensetzung der ermittelten Gesamtlaufzeit eines von einem ersten Ultraschallwandler zu einem zweiten Ultraschallwandler durch das strömende Medium laufenden Ultraschallsignals und

Fig. 2 schematisch ein Anklemm-Ultraschalldurchflußmeßgerät zur Durchführung eines Ultraschalldurchflußmeßverfahrens gemäß einem bevorzugten Ausführungsbeispiel der Erfindung.

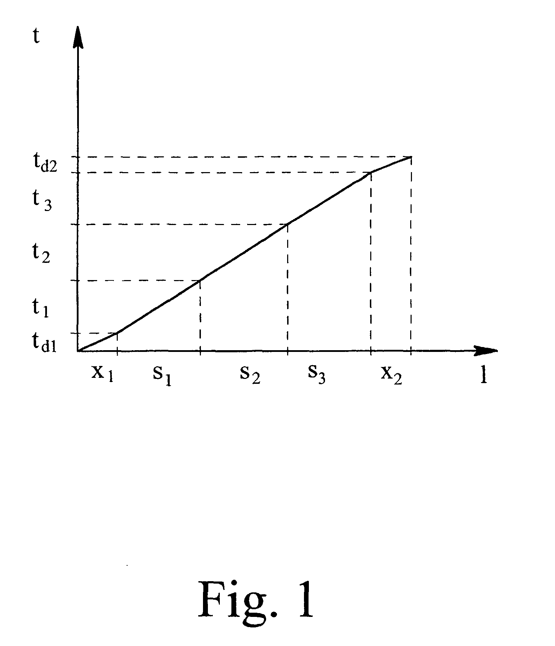

Aus Fig. 1 ist die Auftragung der vom Ultraschallsignal zum Durchlaufen einer jeweiligen Strecke benötigten Zeit $t$ in Abhängigkeit von der jeweiligen Strecke $l$ ersichtlich. Dabei bezeichnet $x_1$ und $x_2$ die Laufst-

rekken in den beiden Ultraschallwandlern, zwischen denen das Ultraschallsignal durch das strömende Medium läuft, wobei $t_{d1}$ und $t_{d2}$ die entsprechenden Laufzeiten einschließlich der Verzögerung durch die Meßelektronik darstellen. Die Summe dieser beiden Zeiten $t_{d1}$ und $t_{d2}$ ergibt die Totzeit $t_d$.

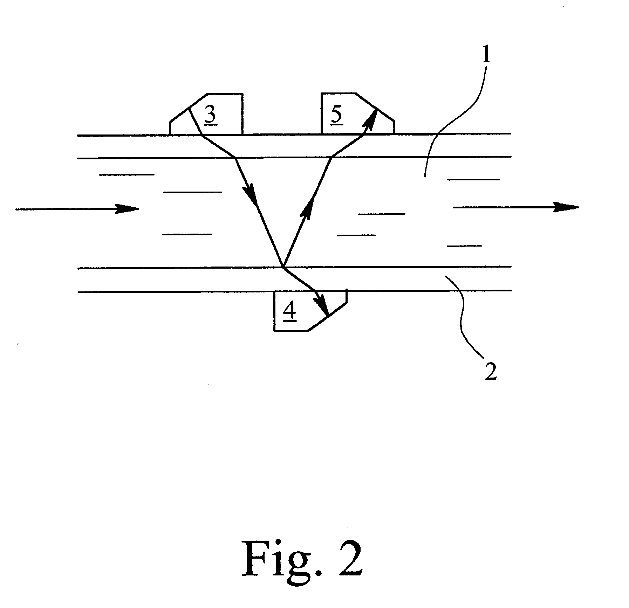

Weiterhin stellen $s_1$, $s_2$ und $s_3$ unmittelbar aufeinanderfolgende gleiche Strekken mit vorbestimmter Länge und vorbestimmtem Winkel gegenüber der Strömungsrichtung dar. Solche gleichen Strecken können z. B. angeordnet sein, wie aus Fig. 2 ersichtlich, wobei dort lediglich zwei unmittelbar aufeinanderfolgende Strecken gezeigt sind. Die Laufzeiten des Ultraschallsignals für diese Strecken sind durch die Zeiten $t_1$, $t_2$ und $t_3$ gegeben.

Um nun die gesamte Totzeit des Ultraschalldurchflußmeßverfahrens zu bestimmen, ist zur Durchführung eines Ultraschalldurchflußmeßverfahrens gemäß einem bevorzugten Ausführungsbeispiel der Erfindung ein aus Fig. 2 ersichtliches Anklemm-Ultraschalldurchflußmeßgerät vorgesehen. Der Einfachheit halber sind von diesem an einer von einem Medium 1 in Pfeilrichtung durchströmten Leitung 2 angeordneten Ultraschalldurchflußmeßgerät lediglich die Ultraschallwandler 3, 4 und 5 dargestellt. Die Ultraschallwandler 3, 4 und 5 sind in Strömungsrichtung des Mediums 1 versetzt zueinander angeordnet, und zwar derart, daß die Laufstrekke eines von dem Ultraschallwandler 3 zu dem Ultraschallwandler 4 laufenden Ultraschallsignals bezüglich Länge und Winkel gegenüber der Strömungsrichtung des strömenden Mediums 1 der Strecke zwischen dem Ultraschallwandler 4 und dem Ultraschallwandler 5 entspricht.

Bei dem Ultraschalldurchflußmeßverfahren gemäß dem bevorzugten Ausführungsbeispiel der Erfindung werden nun mittels einer nicht weiter dargestellten Meßelektronik die Laufzeiten eines Ultraschallsignals von dem ersten Ultraschallwandler 3 zum zweiten Ultraschallwandler 4 bzw. von dem ersten Ultraschallwandler 3 zu dem dritten Ultraschallwandler 5 ermittelt, wobei im letzteren Fall im Bereich des Ultraschallwandler 4 eine teilweise Reflektion des von dem Ultraschallwandler 3 kommenden Ultraschallsignals zum Ultraschallwandler 5 am Innenrand der Leitung 2 stattfindet. Die Totzeit des entsprechend dem Ultraschalldurchflußmeßverfahren gemäß dem bevorzugten Ausführungsbeispiel der Erfindung betriebenen Anklemm-Ultraschalldurchflußmeßgeräts wird nun ermittelt, indem die Differenz der doppelten Laufzeit des Ultraschallsignals vom ersten Ultraschallwandler 3 zum zweiten Ultraschallwandler 4 und der einfachen Laufzeit des Ultraschallsignals vom ersten Ultraschallwandler 3 zum dritten Ultraschallwandler 5 gebildet wird.

Während des Ultraschalldurchflußmeßverfahrens wird kontinuierlich eine solche Ermittlung der Totzeit durchgeführt, so daß die in Echtzeit ermittelte Totzeit ebenfalls in Echtzeit für die Korrektur des mittels des Anklemm-Ultraschalldurchflußmeßgeräts erfaßten Durchflußwertes verwendet wird.

## Patentansprüche

1. Ultraschalldurchflußmeßverfahren, wobei der Durchfluß eines strömenden Mediums (1) durch eine Leitung (2) mittels einer Laufzeitmessung eines Ultraschallsignals ermittelt wird, das von einem ersten Ultraschallwandler (3) zu wenigstens einem anderen Ultraschallwandler (4, 5) läuft, **dadurch gekennzeichnet, daß** die Laufzeit des Ultraschallsignals bei $m$-maligem, unmittelbar aufeinanderfolgenden Durchlaufen einer vorbestimmten Strecke im strömenden Medium mit vorbestimmter Länge und vorbestimmtem Winkel gegenüber der Strömungsrichtung erfaßt wird und die Laufzeit des Ultraschallsignals bei $n$-maligem, unmittelbar aufeinanderfolgenden Durchlaufen der vorbestimmten Strecke im strömenden Medium mit der vorbestimmten Länge und dem vorbestimmten Winkel gegenüber der Strömungsrichtung erfaßt wird, wobei sich die ermittelten Laufzeiten des Ultraschallsignals sowohl aus der Totzeit des Ultraschalldurchflußmeßverfahrens als auch aus der Zeit zusammensetzen, die für das m- bzw. n-malige Durchlaufen der vorbestimmten Strecke im strömenden Medium erforderlich ist, wobei $m$ und $n$ ganzzahlig und voneinander verschieden sind und aus den erfaßten Laufzeiten die Totzeit des Ultraschalldurchflußmeßverfahrens ermittelt wird.

2. Ultraschalldurchflußmeßverfahren nach Anspruch 1, **dadurch gekennzeichnet, daß** die Totzeit $t_d$ des Ultraschalldurchflußmeßverfahrens mittels der Formel

$$t_d = \frac{t_m \cdot n - t_n \cdot m}{n - m}$$

berechnet wird, wobei $t_m$ die Laufzeit des Ultraschallsignals bei $m$-maligem, unmittelbar aufeinanderfolgenden Durchlaufen der vorbestimmten Strecke mit der vorbestimmten Länge und dem vorbestimmten Winkel gegenüber der Strömungsrichtung und $t_n$ die Laufzeit des Ultraschallsignals bei $n$-maligem, unmittelbar aufeinanderfolgenden Durchlaufen der vorbestimmten Strecke mit der vorbestimmten Länge und dem vorbestimmten Winkel gegenüber der Strömungsrichtung ist.

3. Ultraschalldurchflußmeßverfahren nach Anspruch 1 oder 2, **dadurch gekennzeichnet, daß** die jeweilige Laufzeit des Ultraschallsignals bei $m$-maligem, $n$-maligem, ......... $z$- maligem, unmittelbar aufeinanderfolgenden Durchlaufen der vorbestimmten Strek-

ke mit der vorbestimmten Länge und dem vorbestimmten Winkel gegenüber der Strömungsrichtung erfaßt wird, wobei $m$, $n$, ..... $z$ ganzzahlig und voneinander verschieden sind.

**4.** Ultraschalldurchflußmeßverfahren nach Anspruch 3, **dadurch gekennzeichnet, daß** die Totzeit $t_d$ des Ultraschalldurchflußmeßverfahrens mittels der Formel

$$\begin{bmatrix} 1 & m \\ 1 & n \\ . & . \\ . & . \\ . & . \\ 1 & z \end{bmatrix} \cdot \begin{bmatrix} t_d \\ t_s \end{bmatrix} = \begin{bmatrix} t_m \\ t_n \\ . \\ . \\ . \\ t_z \end{bmatrix}$$

auf der Grundlage eines Näherungsverfahrens, wie der Methode der geringsten Abstandsquadrate, bestimmt wird, wobei $t_s$ die Laufzeit ist, die nur von dem Durchlaufen der Strecken im strömenden Medium herrührt,

**5.** Ultraschalldurchflußmeßverfahren nach einem der Ansprüche 1 bis 4, **dadurch gekennzeichnet, daß** wenigstens drei jeweils in Strömungsrichtung zueinander versetzte Ultraschallwandler (3, 4, 5) vorgesehen werden, das Ultraschallsignal von einem ersten Ultraschallwandler (3) längs der vorbestimmten Strecke mit vorbestimmter Länge und vorbestimmtem Winkel gegenüber der Strömungsrichtung ausgesandt und von einem zweiten Ultraschallwandler (4) empfangen wird, das Ultraschallsignal an der Leitung (2) im Bereich des zweiten Ultraschallwandlers (4) teilweise reflektiert wird und längs der vorbestimmten Strecke mit vorbestimmter Länge und vorbestimmtem Winkel gegenüber der Strömungsrichtung zu dem dritten Ultraschallwandler (5) läuft, die Laufzeit des Ultraschallsignals von dem ersten Ultraschallwandler (3) zu dem zweiten Ultraschallwandler (4) und die Laufzeit des Ultraschallsignals von dem ersten Ultraschallwandler (3) zu dem dritten Ultraschallwandler (5) erfaßt wird und die Totzeit des Ultraschalldurchflußmeßverfahrens aus der Differenz der doppelten Laufzeit des Ultraschallsignals von dem ersten Ultraschallwandler (3) zu dem zweiten Ultraschallwandler (4) und der einfachen Laufzeit des Ultraschallsignals von dem ersten Ultraschallwandler (3) zu dem dritten Ultraschallwandler (5) berechnet wird.

**6.** Ultraschalldurchflußmeßverfahren nach einem der Ansprüche 1 bis 5, **dadurch gekennzeichnet, daß** die Totzeit des Ultraschalldurchflußmeßverfahrens in Echtzeit ermittelt und bei der Ermittlung des Durchflusses des strömenden Mediums (1), vorzugsweise ebenfalls in Echtzeit, berücksichtigt wird.

**Claims**

**1.** Ultrasonic flow measuring method, the flow of a flowing medium (1) through a line (2) being determined by measuring the propagation time of an ultrasonic signal which passes from a first ultrasonic transducer (3) to at least one other ultrasonic transducer (4, 5), **characterized in that** the propagation time of the ultrasonic signal upon passing through a predetermined section in the flowing medium of a predetermined length and with a predetermined angle with respect to the direction of flow m times in direct succession is detected, and the propagation time of the ultrasonic signal upon passing through the predetermined section in the flowing medium of the predetermined length and with the predetermined angle with respect to the direction of flow n times in direct succession is detected, the determined propagation times of the ultrasonic signal being composed both of the delay of the ultrasonic flow measuring method and of the time needed to pass through the predetermined section in the flowing medium m and n times, where m and n are integers and are different from one another and the delay of the ultrasonic flow measuring method is determined from the propagation times detected.

**2.** Ultrasonic flow measuring method according to Claim 1, **characterized in that** the delay $t_d$ of the ultrasonic flow measuring method is calculated using the formula

$$t_d = \frac{t_m \cdot n - t_n \cdot m}{n - m}$$

where $t_m$ is the propagation time of the ultrasonic signal upon passing through the predetermined section of the predetermined length and with the predetermined angle with respect to the direction of flow m times in direct succession, and $t_n$ is the propagation time of the ultrasonic signal upon passing through the predetermined section of the predetermined length and with the predetermined angle with respect to the direction of flow n times in direct succession.

**3.** Ultrasonic flow measuring method according to Claim 1 or 2, **characterized in that** the respective propagation time of the ultrasonic signal upon passing through the predetermined section of the predetermined length and with the predetermined angle with respect to the direction of flow $m$ times, $n$ times, ... $z$ times in direct succession is detected, where $m, n, ... z$ are integers and are different from one another.

4. Ultrasonic flow measuring method according to Claim 3, **characterized in that** the delay $t_d$ of the ultrasonic flow measuring method is determined on the basis of an approximation method, such as the least squares distance method, using the formula

$$\begin{bmatrix} 1 & m \\ 1 & n \\ \cdot & \cdot \\ \cdot & \cdot \\ \cdot & \cdot \\ 1 & z \end{bmatrix} \cdot \begin{bmatrix} t_d \\ t_s \end{bmatrix} = \begin{bmatrix} t_m \\ t_n \\ \cdot \\ \cdot \\ \cdot \\ t_z \end{bmatrix}$$

where $t_s$ is the propagation time which is caused only by passing through the sections in the flowing medium.

5. Ultrasonic flow measuring method according to one of Claims 1 to 4, **characterized in that** at least three ultrasonic transducers (3, 4, 5) which are each offset with respect to one another in the direction of flow are provided, the ultrasonic signal from a first ultrasonic transducer (3) is emitted along the predetermined section of the predetermined length and with the predetermined angle with respect to the direction of flow and is received by a second ultrasonic transducer (4), the ultrasonic signal on the line (2) is partially reflected in the region of the second ultrasonic transducer (4) and passes to the third ultrasonic transducer (5) along the predetermined section of the predetermined length and with the predetermined angle with respect to the direction of flow, the propagation time of the ultrasonic signal from the first ultrasonic transducer (3) to the second ultrasonic transducer (4) and the propagation time of the ultrasonic signal from the first ultrasonic transducer (3) to the third ultrasonic transducer (5) are detected, and the delay of the ultrasonic flow measuring method is calculated from the difference between twice the propagation time of the ultrasonic signal from the first ultrasonic transducer (3) to the second ultrasonic transducer (4) and the single propagation time of the ultrasonic signal from the first ultrasonic transducer (3) to the third ultrasonic transducer (5).

6. Ultrasonic flow measuring method according to one of Claims 1 to 5, **characterized in that** the delay of the ultrasonic flow measuring method is determined in real time and is taken into account when determining the flow of the flowing medium (1), preferably likewise in real time.

**Revendications**

1. Procédé de mesure de débit à ultrasons, le débit d'un fluide qui s'écoule (1) à travers une conduite (2) étant déterminé au moyen d'une mesure du temps de propagation d'un signal ultrasonique qui se propage d'un premier transducteur à ultrasons (3) vers au moins un autre transducteur à ultrasons (4, 5), **caractérisé en ce que** le temps de propagation du signal ultrasonique lors de m parcours immédiatement successifs d'un trajet prédéfini dans le fluide qui s'écoule avec une longueur prédéfinie et un angle prédéfini par rapport au sens de l'écoulement est enregistré et le temps de propagation du signal ultrasonique lors de n parcours immédiatement successifs du trajet prédéfini dans le fluide qui s'écoule avec la longueur prédéfinie et l'angle prédéfini par rapport au sens de l'écoulement est enregistré, les temps de propagation déterminés du signal ultrasonique se composant à la fois du temps mort du procédé de mesure de débit à ultrasons et du temps qui est nécessaire pour les m ou les n parcours du trajet prédéfini dans le fluide qui s'écoule, m et n étant des nombres entiers et différents l'un de l'autre et le temps mort du procédé de mesure de débit à ultrasons étant déterminé à partir des temps de propagation enregistrés.

2. Procédé de mesure de débit à ultrasons selon la revendication 1, **caractérisé en ce que** le temps mort $t_d$ du procédé de mesure de débit à ultrasons est calculé au moyen de la formule

$$t_d = \frac{t_m \cdot n - t_n \cdot m}{n - m}$$

$t_m$ désignant ici le temps de propagation du signal ultrasonique lors de m parcours immédiatement successifs du trajet prédéfini ayant la longueur prédéfinie et l'angle prédéfini par rapport au sens de l'écoulement et $t_n$ le temps de propagation du signal ultrasonique lors de n parcours immédiatement successifs du trajet prédéfini ayant la longueur prédéfinie et l'angle prédéfini par rapport au sens de l'écoulement.

3. Procédé de mesure de débit à ultrasons selon la revendication 1 ou 2, **caractérisé en ce que** le temps de propagation respectif du signal ultrasonique lors de m, n, ..., z parcours immédiatement successifs du trajet prédéfini ayant la longueur prédéfinie et l'angle prédéfini par rapport au sens de l'écoulement est enregistré, m, n, ..., z étant des nombres entiers et différents les uns des autres.

4. Procédé de mesure de débit à ultrasons selon la revendication 3, **caractérisé en ce que** le temps mort $t_d$ du procédé de mesure de débit à ultrasons est déterminé au moyen de la formule

$$\begin{bmatrix} 1 & m \\ 1 & n \\ \cdot & \cdot \\ \cdot & \cdot \\ 1 & z \end{bmatrix} \cdot \begin{bmatrix} t_d \\ t_s \end{bmatrix} = \begin{bmatrix} t_m \\ t_n \\ \cdot \\ \cdot \\ t_z \end{bmatrix}$$

sur la base d'un procédé d'approximation comme la méthode du carré du plus petit écart, $t_s$ étant le temps de propagation qui est uniquement basé sur le parcours des trajets dans le fluide qui s'écoule.

5. Procédé de mesure de débit à ultrasons selon l'une des revendications 1 à 4, **caractérisé en ce qu'**au moins trois transducteurs à ultrason (3, 4, 5) respectivement décalés l'un par rapport à l'autre dans le sens de l'écoulement sont prévus, le signal ultrasonique d'un premier transducteur à ultrasons (3) est émis le long du trajet prédéfini de longueur prédéfinie et selon l'angle prédéfini par rapport au sens de l'écoulement et reçu par un deuxième transducteur à ultrasons (4), le signal ultrasonique est partiellement réfléchi sur la conduite (2) dans la zone du deuxième transducteur à ultrasons (4) et se propage le long du trajet prédéfini de longueur prédéfinie et selon l'angle prédéfini par rapport au sens de l'écoulement vers le troisième transducteur à ultrasons (5), le temps de propagation du signal ultrasonique du premier transducteur à ultrasons (3) au deuxième transducteur à ultrasons (4) et le temps de propagation du signal ultrasonique du premier transducteur à ultrasons (3) au troisième transducteur à ultrasons (5) sont enregistrés et le temps mort du procédé de mesure de débit à ultrasons est calculé à partir de la différence entre le double du temps de propagation du signal ultrasonique du premier transducteur à ultrasons (3) au deuxième transducteur à ultrasons (4) et du temps de propagation simple du signal ultrasonique du premier transducteur à ultrasons (3) au troisième transducteur à ultrasons (5).

6. Procédé de mesure de débit à ultrasons selon l'une des revendications 1 à 5, **caractérisé en ce que** le temps mort du procédé de mesure de débit à ultrasons est déterminé en temps réel et il est pris en compte, de préférence aussi en temps réel, lors de la détermination du débit du fluide qui s'écoule (1).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5280728 A
- US 5824914 A